Europäisches Patentamt

European Patent Office

Office européen des brevets

(11) Veröffentlichungsnummer: **0 492 146 A1**

# EUROPÄISCHE PATENTANMELDUNG

(21) Anmeldenummer: **91120096.2**

(22) Anmeldetag: **26.11.91**

(51) Int. Cl.5: **B01F 5/10, C04B 18/14**

(30) Priorität: **24.12.90 DE 4041828**

(43) Veröffentlichungstag der Anmeldung:
**01.07.92 Patentblatt 92/27**

(84) Benannte Vertragsstaaten:
**AT CH DE DK ES FR GB IT LI NL SE**

(71) Anmelder: **Degussa Aktiengesellschaft**
**Weissfrauenstrasse 9**
**W-6000 Frankturt am Main 1(DE)**

(72) Erfinder: **Deuse, Thomas**
**Sandgasse 38**
**W-6050 Offenbach(DE)**
Erfinder: **Simon, Edgar**
**Bergstrasse 24**
**W-6463 Freigericht 5(DE)**

(54) Verfahren zur Herstellung und Förderung einer wässrigen Kieselsäuresuspension.

(57) Eine Spritzbetonschicht oder ein Transportbeton wird hergestellt, indem man als Anmachwasser eine wässrige Suspension einer synthetisch hergestellten Kieselsäure beispielsweise einer gefällten Kieselsäure verwendet.

Fig. 2

EP 0 492 146 A1

EP 0 492 146 A1

Die Erfindung betrifft ein Verfahren zur Herstellung und Förderung einer wässrigen Kieselsäuresuspension

Der Zusatz von Siliciumdioxid zur Betonmischung bewirkt verschiedene Verbesserungen:

Das $SiO_2$ reagiert mit dem bei der Zementreaktion freigesetzten Calciumhydroxid zu Calciumsilikathydrat (puzzolanische Reaktion). Dadurch wird der Erhärtungsvorgang beschleunigt sowie die Endfestigkeit und die Dichtigkeit des Betons erhöht. Der Füllereffekt von feinteiligem $SiO_2$ bewirkt eine bessere Verteilung der Hydratationsprodukte und damit eine geringere Durchlässigkeit des Zementsteins. Der Frischbeton zeigt eine günstigere Kohäsion. Die mineralischen Zuschläge und die Stahlbewehrung werden fester eingebunden. Die Wasserdurchlässigkeit und die Karbonatisierung werden reduziert. Der Frost-Tau-Wechsel-Widerstand und der Widerstand gegen chemischen Angriff werden erhöht.

Es ist bekannt eine Spritzbetonschicht auf einer Oberfläche aufzutragen, wobei aus Zement, Zuschlagstoffen und gegebenenfalls Zusatzmitteln eine trockene Spritzbetonmischung angemacht und mittels Preßluft im Dünnstrom von einer Trockenspritzmaschine zur Spritzdüse gefördert wird. Erst unmittelbar vor dem Verspritzen erfolgt die Benetzung mit dem Anmachwasser. Als Zusatzmittel können zum Beispiel Erstarrungsbeschleuniger, Erstarrungsverzögerer oder auch Kunstharzkomponenten eingesetzt werden. Trockene Spritzbetonmischungen können dabei auch als Fertigmischung in Säcken oder in Transportbetonfahrzeugen aus einer stationären Mischanlage bezogen werden. Zur Vermeidung von Nachteilen, wie zu großer Rückprall und Staubentwicklung und zur Verbesserung der Betonqualität ist es bekannt, Flugstaubnebenprodukte, die aus der Fesi-Produktion in Form einer 50 %igen wässrigen Suspension dem Anmachwasser über eine gesonderte Dosierpumpe zuzugeben (EP-A 0 307 066).

Verarbeitungstechnisch bewirkt die Kieselsäuresuspension einen besseren Zusammenhalt des Frischbetons und damit bei der Anwendung in Spritzbeton einen um mindestens 10 % geringeren Rückprall gegenüber einer bekannten Spritzbeton-Mischung. Ferner werden Feinstanteile besser eingebunden, wodurch die Staubentwicklung bei Spritzen reduziert wird.

Das bekannte Verfahren hat die folgenden Nachteile:
- Die Dosieranlage ist separat regulierbar. Dies bedeutet für die Baustellenpraxis, daß Über- oder Unterdosierungen aufgrund von Rechenfehlern, falscher Abstimmung auf die übrigen Gerätschaften und Materialien sowie mutwilliger Fehleinstellung nicht auszuschließen sind.
- Dosierpumpe und Suspensionscontainer sollten in der Nähe der Spritzdüse plaziert werden. Dies ist gerade bei beengten Verhältnissen, zum Beispiel auf Tunnelbaustellen, nachteilig und führt dazu, daß Pumpe und Container ständig mit dem Baufortschritt weiterbewegt werden müssen. Hinzu kommen An- und Abtransport der sperrigen Container.
- Die gebrauchsfertig angelieferte Suspension muß vor dem Spritzeinsatz homogenisiert werden.

Die Suspension ist frostempfindlich und kann daher nicht bei Temperatur unter 0 °C verarbeitet werden. Die vorliegende Erfindung beseitigt die geschilderten Nachteile.

Der Erfindung liegt die Aufgabe zugrunde, die Reduzierung von Rückprall und Staubentwicklung sowie die Verbesserung der Betongüte durch eine wässrige Suspension mit synthetischer Kieselsäure, die den kompletten Wasserbedarf der Trockenspritzbetonmischung beziehungsweise der Ortbetonmischung sicherstellt, zu erzielen.

Gegenstand der Erfindung ist ein Verfahren zur Herstellung einer Suspension einer synthetisch hergestellten Kieselsäure, welches dadurch gekenzeichnet ist, daß man eine synthetisch hergestellte Kieselsäure in Wasser dispergiert.

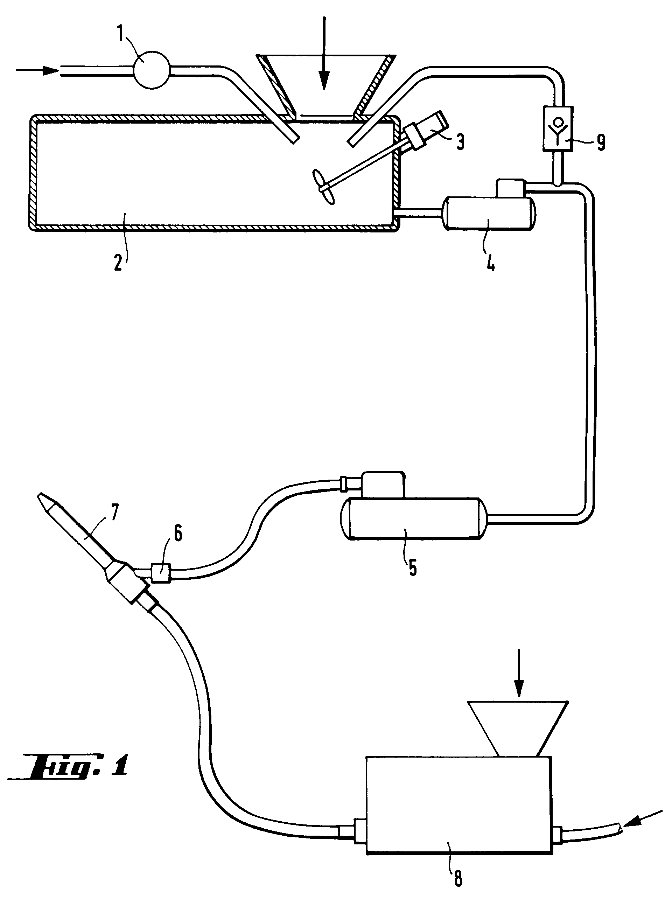

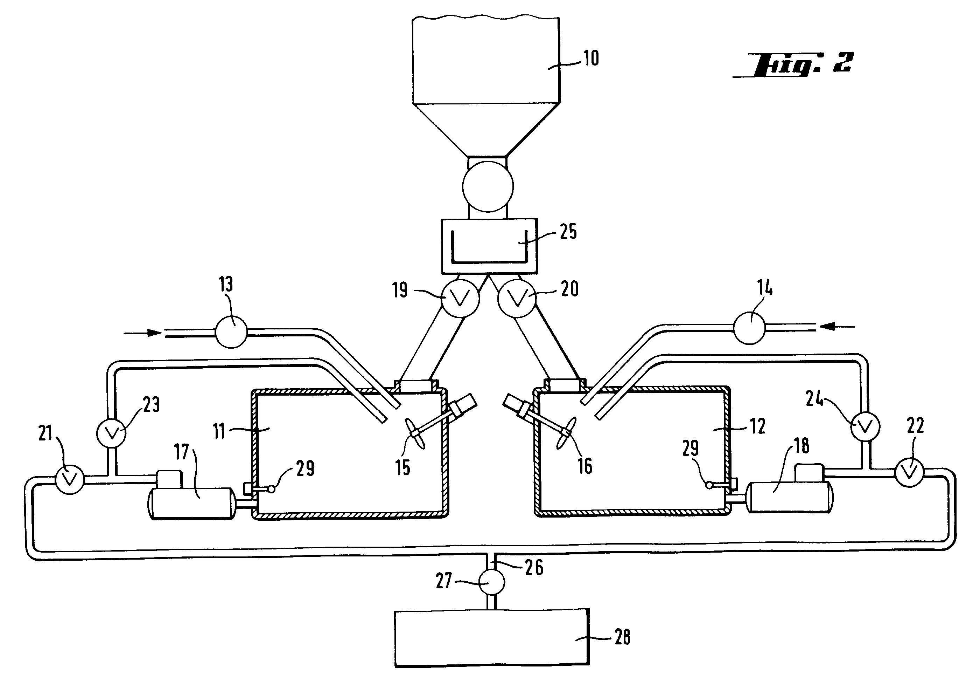

Zur Herstellung der Suspension kann man eine Vorrichtung gemäß Figur 1 oder eine Vorrichtung gemäß Figur 2 verwenden.

Weiterer Gegenstand der Erfindung ist ein Verfahren zum Auftragen einer Spritzbetonschicht mittels dem Trockenspritzverfahren, welches dadurch gekennzeichnet ist, daß man als Anmachwasser eine wässrige Suspension einer synthetisch hergestellten Kieselsäure verwendet. Als synthetisch hergestellte Kieselsäure kann man in einer bevorzugten Form der Erfindung gefällte Kieselsäure einsetzen.

Die wässrige Suspension der synthetisch hergestellten Kieselsäure kann man bevorzugt mit einer Vorrichtung gemäß Figur 1 zudosieren.

Gemäß Figur 1 besteht die Vorrichtung aus dem Wasserzulaufrohr 1, das an dem Vorratstank 2 angeordnet ist, dem Rührwerk 3, das an dem Vorratstank 2 angeordnet ist, der Wasserpumpe 4, der Wasserpumpe 5, dem Wasserregler 6, der Spritzdüse 7, der Trockenspritzmaschine 8 sowie dem Rückschlagventil 9.

Das erfindungsgemäße Verfahren wird in der Figur 1 erläutert:

Entsprechend Figur 1 kann man die Suspension entsprechend der Rezepturvorgaben und der geplanten Arbeitsgeschwindigkeit vor dem Spritzen herstellen, wobei man die für den gesamten Spritzbeton benötigte Wassermenge 1 in einen Vorratstank 2 einfüllt, mittels Rührwerk 3 sowie die im Kreislauf geschaltete

2

Wasserpumpe 4 eine schnelle Verteilung der mit 1 - 15 Gewichtsprozent zuzugebenen synthetischen Kieselsäure im Wasser erzielt, zu Beginn der Spritzarbeiten dann die Wasserpumpe 5 zuschaltet, die Suspension durch den Wasserregler 6 in die Spritzdüse 7 fördert, wo sie über einen Düsenring, den von der Trockenspritzmaschine 8 angelieferten Beton benetzt, bei Unterbrechungen oder am Ende der Spritzarbeiten durch Schließen des Reglers 6 die Wasserpumpe 5 durch die Überdruckabschaltung außer Betrieb setzt, dabei fördert Wasserpumpe 4 weiter und pumpt die Suspension permanent im Kreis, wodurch eine dauerhafte Homogenität gewährleistet wird, und Rückschlagventil 9 unbeabsichtigtes Luftansaugen zum Beispiel bei einem Defekt von Wasserpumpe 4, verhindert.

Ein weiterer Gegenstand der Erfindung ist ein Verfahren zum Herstellen einer Ortbetonmischung, welches dadurch gekennzeichnet ist, daß man als Anmachwasser eine wässrige Suspension einer synthetisch hergestellten Kieselsäure verwendet.

Aus synthetisch hergestellte Kieselsäure kann in einer bevorzugten Form der Erfindung eine gefällte Kieselsäure eingesetzt werden.

Die wässrige Suspension der synthetisch hergestellten Kieselsäure kann bevorzugt mit einer Vorrichtung gemäß Figur 2 zudosiert werden.

Das erfindungsgemäße Verfahren wird in der Figur 2 erläutert:

Gemäß Figur 2 besteht die Vorrichtung zur Herstellung der wässrigen Suspension der synthetischen Kieselsäure aus dem Vorratsbehälter 10 den Tanks 11 und 12, den Wasserzuläufen 13 und 14, die den Tanks 11 und 12 angeordnet sind, den Rührwerken 15 und 16, den Wasserpumpen 17 und 18, den Ventilen 19, 20, 21, 22, 23, 24, der Waage 25, der Abführleitung 26, dem Durchflußmesser 27 und dem Betonmischer 28.

Gemäß Figur 2 wird die synthetische Kieselsäure im Silofahrzeug angeliefert und in das Vorratssilo 10 entleert.

Zu Beginn eines Arbeitstages wird die für das Bauvorhaben erforderliche Konzentration der Kieselsäure im Anmachwasser errechnet oder eine bereits vorhandene Rezeptur aus der elektronischen Steuerung des Transportbetonwerks abgerufen, zum Beispiel ein Beton mit 400 kg Zement und 160 l Wasser, der bei einer Dosierung von 1,5 % synthetischer Kieselsäure auf das Zementgewicht eine 3,6 %ige Suspension als Anmachwasser benötigt.

Zuerst werden die Tanks 11 und 12 mit der erforderlichen Wassermenge durch die Wasseruhren 13 und 14 gefüllt und die Rührwerke 15 und 16 sowie die Wasserpumpen 17 und 18 eingeschaltet. Die Ventile 19, 20, 21 und 22 sind geschlossen, die Ventile 23 und 24 geöffnet, das heißt die Wasserpumpen 17 und 18 fördern permanent im Kreis. Nun erfolgt die gegebenenfalls chargenweise Verwiegung der Kieselsäure über die Waage 25 nach Öffnung des Ventils 19. Nachdem die benötigte Menge im Tank 11 eingearbeitet ist, schließt Ventil 19, Ventil 20 öffnet und der Einarbeitungsvorgang wiederholt sich für Tank 12. Nachem Tank 11 gefüllt und die synthetische Kieselsäure aureichend dispergiert ist, kann die Betonherstellung im Chargenbetrieb beginnen. Dazu schließt Ventil 23 und öffnet Ventil 21 bis die erforderliche Suspensionsmenge durch Abführleitung 26 und Durchflußmesser 27 für die erste Charge in den Betonmischer 28 eingepumpt ist. Dort werden Suspension, Zement, mineralische Zuschläge und gegebenenfalls Zusatzstoffe, Zusatzmittel, Stahlfasern usw. in bekannter Art und Weise zu dem gewünschten Beton aufbereitet.

Nach Einpumpen der für die erste Charge erforderlichen Suspensionsmenge schließt Ventil 21 und Ventil 23 öffnet, wodurch die Suspension wieder im Kreislauf gepumpt wird.

Der zuvor beschriebene Vorgang wiederholt sich für jede weitere Betoncharge bis Füllstandsmelder 27 die Entleerung von Tank 11 anzeigt. Die Ventile 21 und 24 schließen, die Ventile 22 und 23 öffnen und die Förderung wird wie zuvor beschrieben aus Tank 12 fortgesetzt bis Füllstandsmelder 28 in Aktion tritt. Parallel dazu erfolgt die erneute Befüllung von Tank 11 mit Wasser und anschließend die Einarbeitung der syntehtischen Kieselsäure über die Waage 25 und das geöffnete Ventil 19.

Die wechselseitige Befüllung und Entleerung der Tanks 11 und 12 wiederholt sich, bis die Betonherstellung abgeschlossen ist. Erst dann werden die Rührwerke 15 und 16 sowie die Wasserpumpen 17 und 18 abgeschaltet. Die Steuerung des beschriebenen Gesamtablaufs kann problemlos in die fast überall vorhandenen elektronischen Steuerungen der Transportbeton-Mischanlagen integriert werden.

Im Falle einer kontinuierlichen Betonherstellung zum Beispiel mit Durchlaufmischer müssen die Ventile 21, 22, 23, 34 stufenlos regelbar sein und sich elektronisch gesteuert der erforderlichen Fördermenge anpassen.

Je nach Erfordernissen kann jede synthetische Kieselsäure mit mindestens 25 m$^2$/g vorzugsweise so bis 200 m$^2$/g spezifischer Oberfläche bei Zugabemengen von 1 - 15 Gewichtsprozent auf das Anmachwasser bezogen eingesetzt werden. In Bezug auf das Zementgewicht sollte die Dosiermenge zwischen 0,5 und 8 Gewichtsprozent betragen. Vorzugsweise sind 2 - 4 Gewichtsprozent zu verwenden. Besonders geeignete Produkte sind die Fällungskieselsäuren SIPERNAT 22 S, DUROSIL, SIPERNAT 50 S, 500 LS, FK 320 DS, ULTRASIL VN 2 und Silteg AS 7.

Synthetische Kieselsäuren und insbesondere gefällte Kieselsäuren werden beschrieben in:
Ullmann's Encyklopädie der technischen Chemie 4. Auflage, Band 21, Seiten 462 bis 474. (1982).
Die Spritzbetonmischung
kann die folgende
Zusammensetzung aufweisen:
380 kg/m$^3$ Zement
1750 kg/m$^3$ mineralischer
Zuschlag der
Sieblinie B$_8$/C$_8$
160 kg/m$^3$ Wasser
Gegenüber bekanntem Trockenspritzbeton bewirkt die erfindungsgemäße Zugabe von synthetischer Kieselsäure eine deutlich höhere Betongüte verbunden mit Rückprall- und Staubreduzierung. Ferner lassen sich
größere Schichtstärken auch ohne Erstarrungsbeschleuniger in einem Arbeitsgang herstellen.

Gegenüber der bekannten SiO$_2$-Suspensions-Technologie werden folgende Verbesserungen erzielt:
- Das gesamte Anmachwasser wird als Suspension bereitgestellt. Dadurch werden Dosierfehler völlig ausgeschaltet. Die pulverförmige Kieselsäure ist optimal im Anmachwasser und damit auch im Spritzbeton verteilt.
- Die Kieselsäuredosierung ist untrennbar mit der variablen Wasserdosierung durch den Düsenführer gekoppelt, das heißt die vom Wasser/Zement-Wert abhängige Betonqualität wird auf gleichmäßigem Niveau gehalten, da mit zum Beispiel höherer Wassermenge auch mehr SiO$_2$ gefördert wird.
- Zwei Wasserpumpen und ein Rührwerk sind preiswerter als die bekannte Suspensions-Dosieranlage. Ferner ist der Wartungs-und Reinigungsaufwand der Geräte deutlich geringer.
- Durch die Abschaltautomatik entfallen elektrische Schaltelemente und deren Bedienung. Bedienungsfehler werden durch den automatischen Ablauf ausgeschlossen.
- Durch eine zentrale Plazierung des Vorratsbehälters entfallen das Mitführen sowie der An- und Abtransport von Suspensions-Containern. Zum Beispiel erfährt bei beengten Verhältnissen in einem Tunnel der laufende Baubetrieb keine Behinderungen mehr.
- Das zusätzliche Homogenisieren im Falle der Suspensions-Container entfällt durch die permanente Kreislauf-Förderung der Wasserpumpe. Hier ergibt sich eine Einsparung an Arbeitszeit.
- Die Verwendung von erwärmtem Wasser oder eine kostengünstige fest installierte Heizung am Vorratsbehälter ermöglichen Spritzbetonarbeiten auch bei Frost.

Wesentlicht ist, daß die synthetische Kieselsäure im gesamten Anmachwasser sehr gut dispergiert vorliegt. Damit wird auch in dem Trockenspritzbeton eine optimale Verteilung sichergestellt und die synthetische Kieselsäure kann eine hohe Wirksamkeit schon bei geringen Zugabemengen entfalten.

Pumpen- beziehungsweise wasserdruckabhängige Dosierschwankungen, die bei der bekannten separaten Zugabe einer Suspension zum Anmachwassr während des Spritzvorgangs eintreten können, werden durch das erfindungsgemäße Verfahren vollkommen ausgeschaltet. Die Verwendung zweier Wasserpumpen stellt zudem einen konstanten Wasserdruck an der Spritzdüse sicher.

Beispiel

Es wurde Trockenspritzbeton mit 400 kg Zement je m$^3$ unter Zugabe eines flüssigen Aluminatbeschleunigers verarbeitet. Neben dem Ort-Beton kamen je eine Mischung mit Elkem Microsilica Slurry (50 % Feststoffanteil) und mit DUROSIL-Slurry (22,5 % Feststoffanteil) zum Einsatz. Anhand einer Verbrauchsmes-sung errechneten sich je m$^3$ Trockenspritzbeton bei derselben Pumpeneinstellung 50 kg Microsilica Feststoff ( 12,6 % vom Zementgewicht gegenüber 16 kg der synthetischen Kieselsäure DUROSIL ( 3,9 % vom Zementgewicht). Die ungleichen Fördermengen trotz unveränderter Dosierpumpeneinstellung resultieren aus den unterschiedlichen spezifischen Gewichten der Microsilica-Suspension mit 1,40 kg/l und der DUROSIL-Suspension mit 1,12 kg/l.

Die ermittelten Betonwerte sind in der Tabelle I aufgeführt:

Tabelle I

|  | Ort-Beton | 12,6 % Microsilica | 3,9 % DUROSIL |
|---|---|---|---|
| Druckfestigkeit in N/mm² nach 1 Tag | 8,2 8,0 | 19 19 | 19 19 |
| Mittelwert | 8,1 | 19,0 | 19,0 |
| nach 7 Tagen | 10 11 12 - | 26 25 24 27 | 27 25 26 24 |
| Mittelwert | 11,0 | 25,5 | 25,5 |
| nach 28 Tagen | 17 15 17 15 | 32 31 34 33 | 34 33 34 32 |
| Mittelwert | 16 | 32,5 | 33,3 |
| Rohdichten in kg/dm³ | 2,21 2,19 2,21 2,19 | 2,25 2,29 2,28 2,26 | 2,24 2,23 2,24 2,24 |
| Mittelwert | 2,20 | 2,27 | 2,24 |

Das erfindungsgemäße Verfahren wird in der Figur 1 erläutert:

Ablaufbeispiel:

Ein Trockenspritzbeton mit 380 kg Zement benötigt 160 l Wasser je m³. Es sollen pro Tag 40 m³ Spritzbeton eingebaut werden. Die vorgesehene Kieselsäuredosierung beträgt 2 % vom Zementgewicht, das heißt 7,6 kg je m³. Demzufolge wäre eine 4,8 %ige Suspension herzustellen. Es müßten also 304 kg synthetische Kieselsäure in 6.400 l Wasser dispergiert werden. Bei dem bevorzugt verwendeten SIPERNAT 22 S wären dazu rund 20 Gebinde à 15 kg erforderlich.

Die Suspension wird entsprechend der Rezepturvorgaben und der geplanten Arbeitsgeschwindigkeit vor dem Spritzen hergestellt. Dazu wird die für den gesamten Spritzbeton benötigte Wassermenge 1 in einen Vorratstank 2 eingefüllt. Rührwerk 3 sowie die im Kreislauf geschaltete Wasserpumpe 4 gewährleisten eine schnelle Verteilung mit 1 - 15 Gewichtsprozent zuzugebenen synthetischen Kieselsäure im Wasser. Zu Beginn der Spritzarbeiten wird dann die Wasserpumpe 5 zugeschaltet, die die Suspension durch den Wasserregler 6 in die Spritzdüse 7 fördert, wo sie über einen Düsenring den von der Trockenspritzmaschine 8 angelieferten Beton benetzt. Bei Unterbrechungen oder am Ende der Spritzarbeiten wird durch Schließen des Reglers 6 die Wasserpumpe 5 durch die Überdruckabschaltung außer Betrieb gesetzt.

Wasserpumpe 4 fördert weiter und pumpt die Suspension permanent im Kreis. Dadurch wird eine dauerhafte Homogenität gewährleistet. Rückschlagventil 9 verhindert unbeabsichtigtes Luftansaugen zum Beispiel bei einem Defekt von Wasserpumpe 4. Mit Ausnahme von Wasserpumpe 5 kann die gesamte Anlage zentral auf der Baustelle plaziert werden. Eine Pumpenleistung von 4800 l/h und einen Förderdruck von 4 bar vorausgesetzt, können auch zum Beispiel Tunnelbaustellen von mehreren Kilometer Länge vom Tunneleingang her versorgt werden. Bei Verwendung erwärmten Wassers oder durch eine Heizung des Vorratsbehälters kann auch bei Frost Spritzbeton verarbeitet werden.

**Patentansprüche**

1. Verfahren zur Herstellung einer Suspension einer synthetisch hergestellten Kieselsäure, **dadurch gekennzeichnet,** daß man eine synthetische Kieselsäure in Wasser dispergiert.

2. Verfahren zur Herstellung einer Suspension nach Anspruch 1,
   **dadurch gekennzeichnet,**
   daß man eine Vorrichtung gemäß Figur 1 verwendet.

3. Verfahren zur Herstellung einer Suspension nach Anspruch 1,
   **dadurch gekennzeichnet,**
   daß man eine Vorrichtung gemäß Figur 2 verwendet.

4. Verfahren zum Auftragen einer Spritzbetonschicht mittels dem Trockenspritzverfahren,
   **dadurch gekennzeichnet,**
   daß man als Anmachwasser eine wässrige Suspension einer synthetisch hergestellten Kieselsäure verwendet.

5. Verfahren nach Anspruch 4,
   **dadurch gekennzeichnet,**
   daß man als synthetisch hergestellte Kieselsäure eine gefällte Kieselsäure einsetzt.

6. Verfahren nach den Ansprüchen 4 und 5,
   **dadurch gekennzeichnet,**
   daß man die wässrige Suspension der synthetisch hergestellten Kieselsäure mit einer Vorrichtung gemäß Figur 1 zudosiert.

7. Verfahren zum Herstellen einer Ortbetonmischung,
   **dadurch gekennzeichnet,**
   daß man als Anmachwasser eine wässrige Suspension einer synthetisch hergestellten Kieselsäure verwendet.

8. Verfahren nach Anspruch 7,
   **dadurch gekennzeichnet,**
   daß man als synthetisch hergestellte Kieselsäure eine gefällte Kieselsäure einsetzt.

9. Verfahren nach den Ansprüchen 7 und 8,
   **dadurch gekennzeichnet,**
   daß man die wässrige Suspension der synthetisch hergestellten Kieselsäure mit einer Vorrichtung gemäß Figur 2 zudosiert.

*Fig. 1*

**Fig. 2**

EP 0 492 146 A1

**Europäisches Patentamt**

**EUROPÄISCHER RECHERCHENBERICHT**

Nummer der Anmeldung

EP    91 12 0096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 307 066 (ELKEM)  <br> * Zusammenfassung; Abbildungen *  <br> --- | 1-6 | B01F5/10 <br> C04B18/14 |
| Y | PATENT ABSTRACTS OF JAPAN <br> vol. 7, no. 252 (C-194)(1397) 9. November 1983 <br> & JP-A-58 139 732 ( MITSUI ) <br> * Zusammenfassung * <br> --- | 1-6 | |
| A | GB-A-2 131 409 (ELKEM) <br> * Ansprüche 15-17 * <br> --- | 7-9 | |
| A | DE-A-2 230 766 (UNION PROCESS) <br> --- | | |
| A | PATENT ABSTRACTS OF JAPAN <br> vol. 10, no. 128 (C-345)(2185) 13. Mai 1986 <br> & JP-A-60 251 922 ( KOBE SEIKOSHO ) <br> * Zusammenfassung * <br> ----- | | |

**RECHERCHIERTE SACHGEBIETE (Int. Cl.5)**

B01F
C04B

Der vorliegende Recherchenbericht wurde für alle Patentansprüche erstellt

| Recherchenort | Abschlußdatum der Recherche | Prüfer |
|---|---|---|
| DEN HAAG | 08 APRIL 1992 | PEETERS S. |